# EUROPEAN PATENT APPLICATION

(11) **EP 4 498 498 A1**
(43) Date of publication of application: **29.01.2025**
(21) Application number: 24191305.2
(22) Date of filing: 26.07.2024
(51) Int. Cl.: H01M 50/291, H01M 50/211

(54) **BATTERY STORAGE TRAY**

(30) Priority: 27.07.2023 KR 20230098356
(71) Applicant: SK On Co., Ltd., Seoul 03161 (KR)
(72) Inventor: SEO, Dong Hyun, 34124 Daejeon (KR)
(74) Representative: Stolmár & Partner Patentanwälte PartG mbB

(57) **Abstract**

The disclosed technology may provide a battery storage tray comprising an accommodating portion configured to accommodate one or more battery cells, and one or more inserts configured to accommodate at least a portion of the one or more battery cells, wherein the accommodating portion includes: an inner space in which the one or more inserts are embedded; and one or more first coupling portions disposed in the inner space, wherein each of the one or more first coupling portions includes a plurality of auxiliary coupling portions, and wherein each of the one or more inserts includes a storage groove configured to accommodate at least the portion of the one or more battery cells, and a second coupling portion coupled to one or more auxiliary coupling portions of the plurality of auxiliary coupling portions included in the one or more first coupling portions.

## Description

### TECHNICAL FIELD

The disclosed technology relates to battery storage tray.

### BACKGROUND

The demand for mobile devices such as smartphones, tablet personal computers (PCs), and wireless earphones is increasing. With the development of electric vehicles, energy storage batteries, robots, and satellites, research on high-performance secondary batteries that can be repeatedly charged and discharged as an energy source is actively underway.

### SUMMARY

The disclosed technology can be implemented in some embodiments to provide a battery storage tray that can accommodate various types or sizes of battery cells. In addition, the disclosed technology can be implemented in some embodiments to provide a battery storage tray that implements an area for accommodating battery cells through a convenient assembly method.

A battery storage tray based on one aspect of the disclosed technology may be widely applied in the field of green technologies such as electric vehicles, battery charging stations, and other technologies that use batteries such as solar power generation and wind power generation. In addition, a battery storage tray based on one aspect of the disclosed technology may be applied to a battery manufacturing process used for eco-friendly electric vehicles or hybrid vehicles to help prevent climate change by reducing air pollution and greenhouse gas emissions.

In an aspect of the disclosed technology, a battery storage tray may comprise an accommodating portion configured to accommodate one or more battery cells, and one or more inserts configured to accommodate at least a portion of the one or more battery cells, wherein the accommodating portion includes: an inner space in which the one or more inserts are embedded, and one or more first coupling portions disposed in the inner space, wherein each of the one or more first coupling portions includes a plurality of auxiliary coupling portions, and wherein each of the one or more inserts includes: a storage groove configured to accommodate at least the portion of the one or more battery cells, and a second coupling portion coupled to one or more auxiliary coupling portions of the plurality of auxiliary coupling portions included in the one or more first coupling portions.

In the battery storage tray based on an aspect of the disclosed technology, adjacent auxiliary coupling portions of the plurality of auxiliary coupling portions may be spaced apart from each other by a first gap.

In the battery storage tray based on an aspect of the disclosed technology, a portion of the second coupling portion may pass through the first gap between the adjacent auxiliary coupling portions.

In the battery storage tray based on an aspect of the disclosed technology, the first coupling portion may include a protruding member that protrudes from one surface in the inner space and does contact other surfaces in the inner space.

In the battery storage tray based on an aspect of the disclosed technology, the first coupling portion may be spaced apart from another adjacent surface by a second gap.

In the battery storage tray based on an aspect of the disclosed technology, a portion of the second coupling portion may pass through the second gap between the first coupling portion and the other adjacent surface.

In the battery storage tray based on an aspect of the disclosed technology, the first coupling portion may be disposed on one surface in the inner space, and the one surface may include one or more edges, and one or more first coupling portions are disposed along each edge.

In the battery storage tray based on an aspect of the disclosed technology, the first coupling portion may be spaced apart from an edge of the one surface by a predetermined gap.

In the battery storage tray based on an aspect of the disclosed technology, each of the one or more inserts may include a support body including the second coupling portion disposed at both ends and a plurality of storage frame portions disposed on the support body and each including a bent member that may be at least partially bent, and the storage groove may be disposed in the storage frame portion.

In the battery storage tray based on an aspect of the disclosed technology, each of the one or more inserts may be arranged across the inner space of the accommodating portion.

In the battery storage tray based on an aspect of the disclosed technology, the one or more inserts may include a plurality of inserts, and all of the plurality of inserts may be arranged across the inner space of the accommodating portion in a same direction as each other.

In the battery storage tray based on an aspect of the disclosed technology, the plurality of inserts may include a first insert and a second insert, and the first insert and the second insert may be adjacent to each other while having structures symmetrical to each other.

In the battery storage tray based on an aspect of the disclosed technology, the battery storage tray may further comprise a battery storage portion disposed between the first insert and the second insert and configured to accommodate a battery cell, wherein the battery storage portion may be located in a region in which the storage groove of the first insert and the storage groove of the second insert may face each other.

In the battery storage tray based on an aspect of the disclosed technology, a first maximum number of battery cells to be housed in one direction when all of the plurality of inserts are arranged across the inner space of the accommodating portion in a first direction and a second maximum number of battery cells to be housed in the one direction when all of the plurality of inserts are arranged across the inner space of the accommodating portion in a second direction may be equal to each other.

In the battery storage tray based on an aspect of the disclosed technology, a first array of battery storage portions when the plurality of inserts are arranged across the inner space of the accommodating portion in the first direction to allow the first maximum number of battery cells to be housed, and a second array of battery storage portions when the plurality of inserts are arranged across the inner space of the accommodating portion in the second direction to allow the second maximum number of battery cells to be housed may be the same as each other.

In the battery storage tray based on an aspect of the disclosed technology, the first direction and the second direction may be perpendicular to each other.

In the battery storage tray based on an aspect of the disclosed technology, the battery cell may include an outer material including an electrode assembly embedded therein and one or more terminals electrically connected to the electrode assembly and configured to protrude in one direction from the outer material in a direction not facing the inner space of the accommodating portion.

### BRIEF DESCRIPTION OF THE DRAWINGS

FIG. 1 is a perspective view schematically illustrating a battery storage tray based on one embodiment of the disclosed technology.
FIG. 2 is a perspective view schematically illustrating an accommodating portion of the battery storage tray based on one embodiment of the disclosed technology.
FIG. 3 is a perspective view schematically illustrating a portion of the accommodating portion of the battery storage tray based on one embodiment of the disclosed technology. Specifically, FIG. 3 is an enlarged view of region A of FIG. 2.
FIG. 4 schematically illustrates a portion of the accommodating portion of the battery storage tray based on one embodiment of the disclosed technology. Specifically, FIG. 4 is an XY plan view of region A of FIG. 2.
FIG. 5 schematically illustrates an example of the accommodating portion of the battery storage tray based on one embodiment of the disclosed technology. Specifically, FIG. 5 is an XY plan view of FIG. 2.
FIG. 6 is a perspective view schematically illustrating an insert of the battery storage tray based on one embodiment of the disclosed technology.
FIG. 7 is a perspective view schematically illustrating a portion of the insert of the battery storage tray based on one embodiment of the disclosed technology. Specifically, FIG. 7 is an enlarged view of region B of FIG. 6.
FIG. 8 is a perspective view schematically illustrating an example of the battery storage tray based on one embodiment of the disclosed technology.
FIG. 9 schematically illustrates an example of the battery storage tray based on one embodiment of the disclosed technology. Specifically, FIG. 9 is an XY plan view of FIG. 8.
FIG. 10 schematically illustrates an example of the battery storage tray based on one embodiment of the disclosed technology. Specifically, FIG. 10 is an XY plan view of FIG. 8.
FIG. 11 schematically illustrates an example of the battery storage tray based on one embodiment of the disclosed technology. Specifically, FIG. 11 is an XY plan view of FIG. 8.
FIG. 12 schematically illustrates an example of the battery storage tray based on one embodiment of the disclosed technology. Specifically, FIG. 12 is an XY plan view of FIG. 8.
FIG. 13 is an XY plan view schematically illustrating examples of battery cells housed in the battery storage tray based on one embodiment of the disclosed technology.
FIG. 14 schematically illustrates an example of the battery storage tray based on one embodiment of the disclosed technology and is an XY plan view of FIG. 8.
FIG. 15 is an XY plan view schematically illustrating examples of battery cells housed in the battery storage tray based on one embodiment of the disclosed technology.
FIG. 16 is an XY plan view schematically illustrating an example of the battery storage tray based on one embodiment of the disclosed technology.
FIG. 17 is an XY plan view schematically illustrating examples of battery cells housed in the battery storage tray based on one embodiment of the disclosed technology.
FIG. 18 is an exploded perspective view schematically illustrating an example structure of a battery cell to be housed in the battery storage tray based on one embodiment of the disclosed technology.
FIG. 19 is an exploded perspective view schematically illustrating an example structure of a battery cell to be housed in the battery storage tray based on one embodiment of the disclosed technology.

### DETAILED DESCRIPTION

Hereinafter, some embodiments of the disclosed technology will be described in detail with reference to the accompanying drawings.

Currently, commercialized secondary batteries include nickel-cadmium batteries, nickel-hydrogen batteries, nickel-zinc batteries, and lithium secondary batteries. Among these, lithium secondary batteries have advantages in that they have low self-discharge rates, high energy density, and minimal memory effect, allowing for free charging and discharging.

In some implementations, when manufacturing the secondary batteries, the secondary batteries are housed in trays tailored to the shape of each of the secondary batteries, and the trays containing the secondary batteries are transferred to each process, where it is used in a manufacturing process, a testing process, and others. However, the disclosed technology can be implemented in some embodiments to provide a tray that can accommodate various types or sizes of secondary batteries.

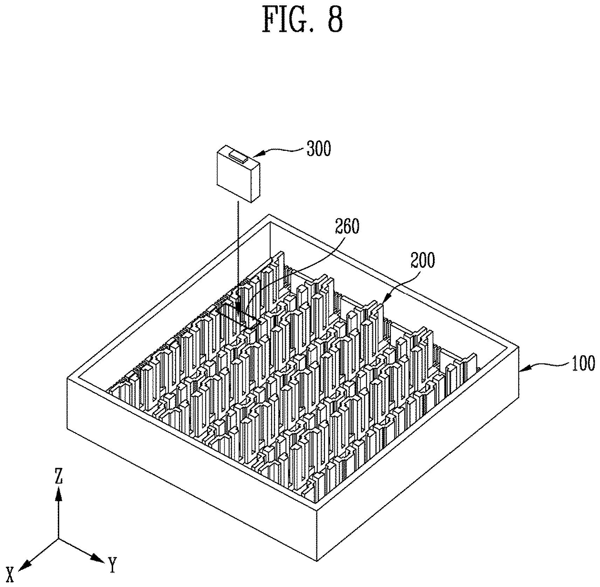

In one aspect of the disclosed technology, a battery storage tray 10 that can accommodate various types (e.g., multiple models) or sizes of battery cells 300 may be provided. In another aspect of the disclosed technology, a battery storage tray 10 in which regions for accommodating battery cells 300 may be implemented through a convenient assembly method (see FIG. 8) may be provided.

The battery storage tray 10 based on one aspect of the disclosed technology may be mainly used in an activation process in a process of manufacturing the battery cells 300. In one example, the activation process may be a process for activating battery cells by applying a low electrical current to inject electric charge to transition the raw lithium-ion battery raw materials in a deactivated state into an activated state after an electrode process and an assembly process are performed so that the activated battery cells become stable and active electrochemical systems in an operable state to perform charging operations by converting electrical energy into chemical energy stored in the cells and discharging operations by converting stored chemical energy into electricity. In some implementations, the activation process undergoes a formation process, an aging process, and a performance testing process and may include a degassing process when necessary. In some implementations, the battery storage tray 10 may be used in the overall activation process. However, the use of the battery storage tray 10 is not limited to the activation process, and the battery storage tray 10 may also be used in other processes or conditions.

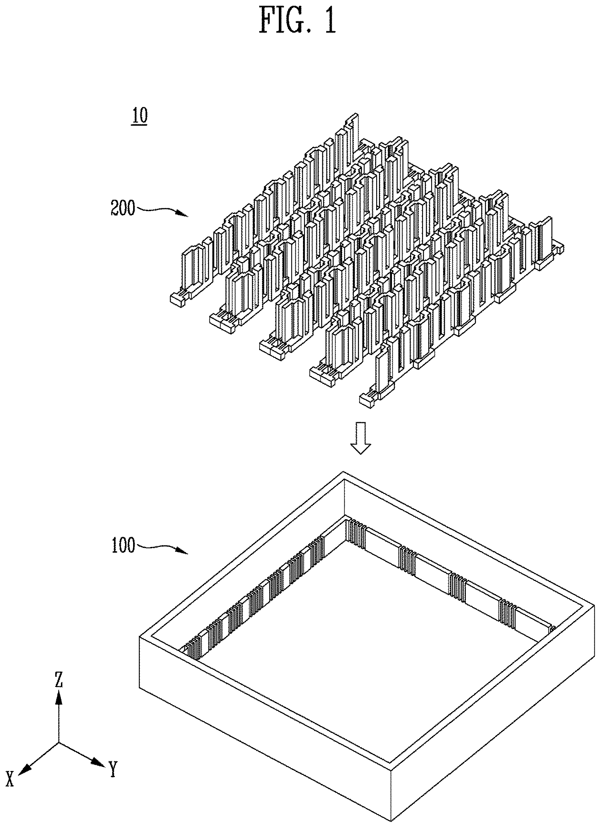

FIG. 1 is a perspective view schematically illustrating the battery storage tray 10 based on one embodiment of the disclosed technology. In some implementations, battery cells 300 are accommodated in the battery storage tray 10 (see FIG. 8).

Referring to FIG. 1, the battery storage tray 10 based on one aspect of the disclosed technology may include an accommodating portion 100. In some implementations, the battery storage tray 10 may include an insert 200. In some implementations, the battery storage tray 10 may include an accommodating portion 100 and an insert 200 embedded in the accommodating portion 100. The insert 200 may be embedded in the accommodating portion 100 and may be embedded while coupled and fixed to a portion of the accommodating portion 100. The insert 200 may be coupled and fixed to a portion of the accommodating portion 100 or may be decoupled and separated therefrom. Details thereof will be described below.

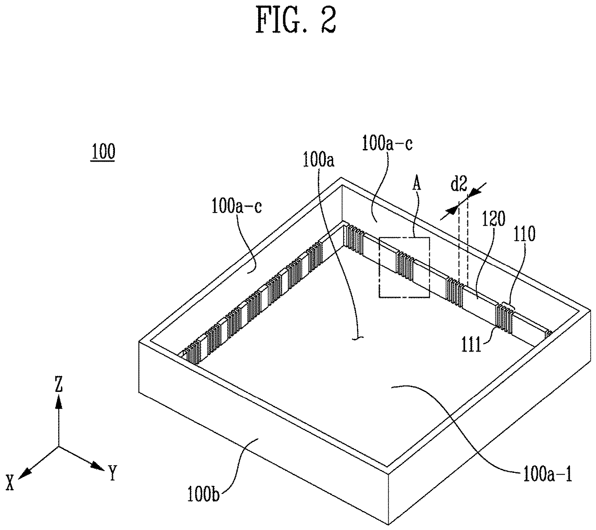

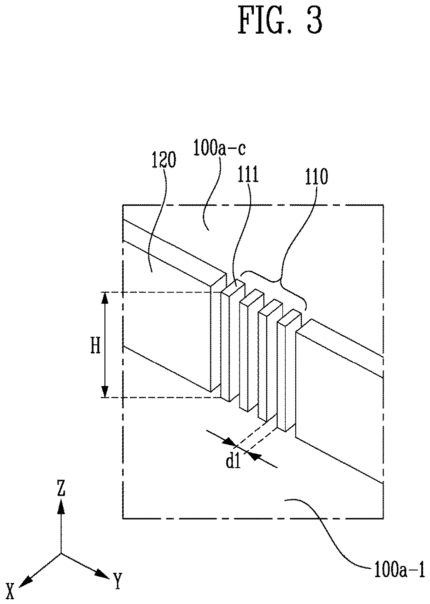

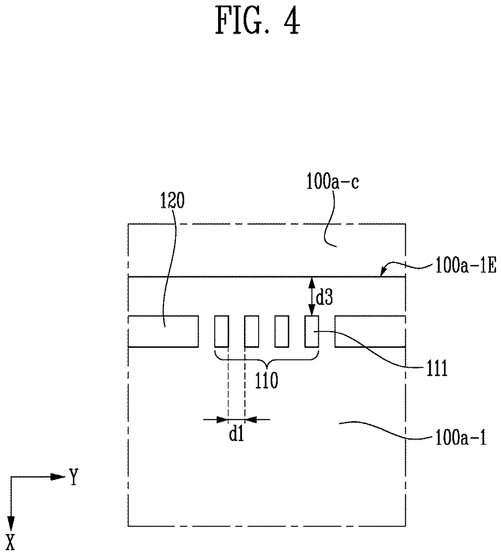

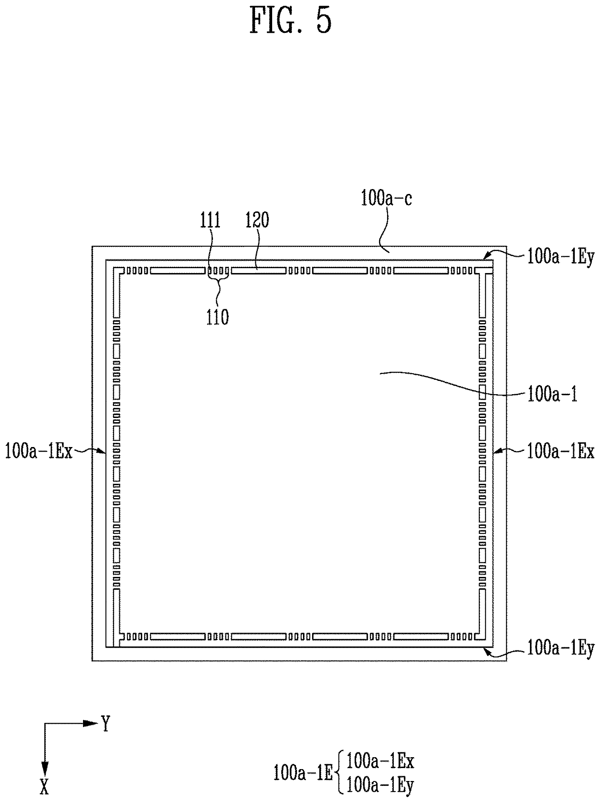

FIG. 2 is a perspective view schematically illustrating the accommodating portion 100 of the battery storage tray 10 based on one embodiment of the disclosed technology. FIG. 3 is a perspective view schematically illustrating a portion of the accommodating portion 100 of the battery storage tray 10 based on one embodiment of the disclosed technology and is an enlarged view of region A of FIG. 2. FIG. 4 schematically illustrates a portion of the accommodating portion 100 of the battery storage tray 10 based on one embodiment of the disclosed technology. Specifically, FIG. 4 is an XY plan view of region A of FIG. 2. FIG. 5 schematically illustrates the accommodating portion 100 of the battery storage tray 10 based on one embodiment of the disclosed technology. Specifically, FIG. 5 is an XY plan view of FIG. 2. The accommodating portion 100 based on one aspect of the disclosed technology will be described in detail using FIGS. 2 to 5.

The accommodating portion 100 based on one aspect of the disclosed technology may include a plastic material. The structure of the accommodating portion 100 may be designed appropriately in consideration of the insert 200 to be embedded and the battery cells 300 to be housed. In some implementations, structures of components such as a first coupling portion 110 of the accommodating portion 100, which will be described below, may also be appropriately designed. Through the design, the accommodating portion 100 may be implemented by injection molding or the like.

Referring to FIG. 2, the accommodating portion 100 based on one aspect of the disclosed technology may include an inner space 100a in which the insert 200 is embedded and one or more first coupling portions 110 provided in the inner space 100a.

The accommodating portion 100 based on one aspect of the disclosed technology may have a polyhedral shape with one open surface. For example, referring to FIG. 2, the accommodating portion 100 may have a hexahedral shape with one open surface. In some implementations, the accommodating portion 100 based on another aspect of the disclosed technology may have a polyhedral shape with multiple open surfaces. In some implementations, the accommodating portion 100 based on another aspect of the disclosed technology may have a polyhedral shape with one open surface and another surface that is different from the one surface and is at least partially open. For example, one terminal 340 of a bidirectional battery cell 300, which will be described below, may protrude outward through the one open surface, and the other terminal 340 may protrude outward through the open portion of the other surface that is at least partially open. In another example, the other surface may be locally and/or partially open to allow the terminal 340 to protrude outward. However, these are only examples, and the accommodating portion 100 may be designed in various different shapes as necessary as long as the terminals 340 can appropriately protrude outward and easily come in contact with a probe used in formation or testing.

The accommodating portion 100 based on one aspect of the disclosed technology may have one open surface as described above for the insert 200 to be embedded therein and may include the inner space 100a formed by being surrounded by surfaces other than the open surface. That is, the inner space 100a may be a space formed by being surrounded by surfaces of the accommodating portion 100 other than the open surface thereof for the insert 200 to be embedded therein. Accordingly, the insert 200 may be embedded in the inner space 100a. In some implementations, as described above, the accommodating portion 100 may include one open surface and another surface that is locally open to allow the terminal 340 to protrude outward.

In some implementations, referring to FIG. 2, the accommodating portion 100 may include outer walls 100b to protect the insert 200 embedded therein from the outside. The outer walls 100b may be substantial components that form the inner space 100a described above.

The accommodating portion 100 based on one aspect of the disclosed technology may fix the insert 200 embedded therein and may include one or more first coupling portions 110 disposed in the inner space 100a for the insert 200 to be fixed in the accommodating portion 100. The insert 200 may be embedded in the inner space 100a of the accommodating portion 100 and fixed therein while being coupled to the first coupling portion 110.

In some implementations, in the accommodating portion 100 based on one aspect of the disclosed technology, the first coupling portion 110 may include a plurality of auxiliary coupling portions 111. The number of the auxiliary coupling portions 111 is not particularly limited as long as the number is plural but may be determined based on the shape or size of a second coupling portion 220 of the insert 200 which will be described below. For example, in FIG. 2, the number of auxiliary coupling portions 111 of a specific (one) first coupling portion 110 may be four.

In some implementations, the first coupling portion 110 may include the plurality of auxiliary coupling portions 111, and the plurality of auxiliary coupling portions 111 may be provided to be continuous. Here, in some implementations, the word "continuous" may be used to indicate a situation where other components are not present between the auxiliary coupling portions 111. That is, a portion where the auxiliary coupling portions 111 are arranged continuously may be referred to as the first coupling portion 110.

Referring to FIG. 2, the accommodating portion 100 may include a plurality of first coupling portions 110 and may optionally include a sidewall 120 configured to partition between adjacent first coupling portions 110. When the accommodating portion 100 includes the plurality of first coupling portions 110, a gap between adjacent first coupling portions 110 may be designed appropriately in consideration of the insert 200 to be embedded and the battery cells 300 to be accommodated. In some implementations, when the accommodating portion 100 includes the sidewall 120, the size (which is a term encompassing the width, length, and height), shape, and position of the sidewall 120 and a gap between the sidewall 120 and the first coupling portion 110 adjacent thereto may also be designed appropriately in consideration of the insert 200 to be embedded and the battery cells 300 to be accommodated.

In some implementations, the accommodating portion 100 based on one aspect of the disclosed technology may include a plurality of first coupling portions 110 as described above. Each of the first coupling portions 110 may independently include a plurality of auxiliary coupling portions 111, and here, each of the first coupling portions 110 may independently include a different number of auxiliary coupling portions 111. For example, one first coupling portion 110 may include four auxiliary coupling portions 111, and another first coupling portion 110 may include seven auxiliary coupling portions 111.

The number of first coupling portions 110 and the number of auxiliary coupling portions 111 that each of the first coupling portions 110 includes in the accommodating portion 100 based on one aspect of the disclosed technology are determined based on the sizes and numbers of inserts 200 and battery cells 300 to be housed therein, which will be described below, and thus are not particularly limited to specific ranges.

Referring to FIG. 2, the auxiliary coupling portions 111 may be arranged in parallel in one direction. For example, referring to the region marked as "A" in FIG. 2, the first coupling portion 110 may include a plurality of auxiliary coupling portions 111, and the auxiliary coupling portions 111 may be arranged in parallel in the Y-axis direction. That is, all of the auxiliary coupling portions 111 that one first coupling portion 110 includes may be arranged in parallel in one direction.

In some implementations, the auxiliary coupling portions 111 based on one aspect of the disclosed technology may have widths, lengths, and heights that are the same as or different from each other. That is, the sizes (which is a term encompassing the widths, lengths, and heights) of the auxiliary coupling portions 111 may be independent from each other. Here, the width may be a gap between both ends in the X-axis direction. In some implementations, the length may be a gap between both ends in the Y-axis direction. In some implementations, the height may be a gap between both ends in the Z-axis direction (see FIG. 3).

Referring to FIG. 3, the widths, lengths, and heights H of the auxiliary coupling portions 111 may be the same as or different from each other. The auxiliary coupling portions 111 of the first coupling portion 110 based on one aspect of the disclosed technology may all have the same heights. Here, "same" may mean being substantially the same and may indicate a case where values are different and a difference between the values is within 10% as well as a case where the values are completely the same. In some implementations, the height H may be a distance from the lowest position to the highest position in the Z-axis direction. When the heights H of the auxiliary coupling portions 111 are the same, higher coupling stability can be secured when the insert 200 is embedded in the accommodating portion 100.

In some implementations, the widths, lengths, and heights of the auxiliary coupling portions 111 may be determined based on the shape or size of the second coupling portion 220 of the insert 200 which will be described below. In particular, the height H of the auxiliary coupling portion 111 may be at least 5% or more or 10% or more of the height of the accommodating portion 100 to secure stability of coupling to the insert 200. The height of the accommodating portion 100 may be a distance from the lowest position to the highest position in the accommodating portion 100 in the Z-axis direction.

In the auxiliary coupling portions 111 based on one aspect of the disclosed technology, a predetermined gap d1 may be present between adjacent auxiliary coupling portions 111. Referring to FIGS. 3 and 4, a plurality of auxiliary coupling portions 111 may be present in the first coupling portion 110, and the predetermined gap d1 may be present between the auxiliary coupling portions 111 adjacent to each other. In some implementations, gaps d1 between different pairs of adjacent auxiliary coupling portions 111 may be different from or the same as each other. In some implementations, the size of the gap d1 may be determined based on the shape or size of the second coupling portion 220 of the insert 200 which will be described below. When the predetermined gap d1 is present between adjacent auxiliary coupling portions 111, it is possible to provide the battery storage tray 10 that can accommodate various types (e.g., multiple models) or sizes of battery cells 300 and allows regions for accommodating the battery cells 300 to be implemented through a convenient assembly method.

Referring to FIG. 3, the first coupling portion 110 of the battery storage tray 10 based on one aspect of the disclosed technology may be provided to protrude from one surface 100a-1 in the inner space 100a. Specifically, referring to FIGS. 2 and 3, the first coupling portion 110 may be provided on the one surface 100a-1 in the inner space 100a. In some implementations, the first coupling portion 110 may be provided on the one surface 100a-1 and may be provided to protrude from the one surface 100a-1 in the positive Z-axis direction. Here, the positive Z-axis direction may be a direction indicated by an arrow of the Z-axis shown in the drawings. The protruding shape may be implemented by injection molding or the like.

In some implementations, referring to FIG. 3, in the first coupling portion 110 of the battery storage tray 10 based on one aspect of the disclosed technology, the auxiliary coupling portions 111 may be provided to protrude from the one surface 100a-1 in the inner space 100a. Referring to FIGS. 2 and 3, the auxiliary coupling portions 111 may be provided on the one surface 100a-1 in the inner space 100a. In some implementations, the auxiliary coupling portions 111 may be provided on the one surface 100a-1 and may be provided to protrude from the one surface 100a-1 in the positive Z-axis direction.

In some implementations, the accommodating portion 100 of the battery storage tray 10 based on one aspect of the disclosed technology may further include other surfaces 100a-c in addition to the one surface 100a-1 on which the first coupling portion 110 is provided. In the disclosed technology, the other surfaces 100a-c of the inner space 100a may be other surfaces of the inner space 100a excluding the one surface 100a-1. Referring to FIG. 2, the accommodating portion 100 may include four other surfaces 100a-c that surround the one surface 100a-1 on which the first coupling portion 110 is provided.

In some implementations, the first coupling portion 110 of the battery storage tray 10 based on one aspect of the disclosed technology may be provided to face at least some of the other surfaces 100a-c of the inner space 100a. Here, referring to FIG. 2, any first coupling portion 110 may be provided to face two of the four other surfaces 100a-c while being provided on the one surface 100a-1 of the inner space 100a. For example, referring to FIG. 2, the first coupling portion 110 in region A may be provided to face two other surfaces 100a-c, which are positioned parallel to the Y-axis direction, while being provided on the one surface 100a-1 of the inner space 100a.

In some implementations, in the first coupling portion 110 of the battery storage tray 10 based on one aspect of the disclosed technology, the auxiliary coupling portions 111 may be provided to face at least some of the other surfaces 100a-c of the inner space 100a as above. The auxiliary coupling portions 111 of the first coupling portion 110 may be arranged in parallel in one direction as described above, and the arrangement direction may be a direction facing the other surfaces 100a-c. That is, the auxiliary coupling portions 111 may be arranged in parallel in the Y-axis direction, and the auxiliary coupling portions 111 may be provided to face the other surfaces 100a-c positioned parallel to the Y-axis direction.

Referring to FIG. 2, the first coupling portion 110 of the battery storage tray 10 based on one aspect of the disclosed technology may not come in contact with the other surfaces 100a-c in the inner space 100a. Specifically, referring to FIG. 2, in the first coupling portion 110 of the battery storage tray 10 based on one aspect of the disclosed technology, the auxiliary coupling portions 111 may not come in contact with the other surfaces 100a-c in the inner space 100a.

Referring to FIG. 2, the first coupling portion 110 of the battery storage tray 10 based on one aspect of the disclosed technology may be provided with a predetermined gap d2 from the other surface 100a-c adjacent thereto. Here, the other surface 100a-c adjacent thereto may be the other surface 100a-c that is the closest to the first coupling portion 110, which is provided on the one surface 100a-1 of the inner space 100a, while facing the first coupling portion 110.

In some implementations, referring to FIG. 2, the auxiliary coupling portions 111 of the first coupling portion 110 may be provided with the predetermined gap d2 from the other surface 100a-c adjacent thereto. In some implementations, the size of the gap d2 may be determined based on the shape or size of the second coupling portion 220 of the insert 200 which will be described below. When the predetermined gap d2 is present between the first coupling portion 110 and the other surface 100a-c adjacent thereto, it is possible to provide the battery storage tray 10 that can accommodate various types (e.g., multiple models) or sizes of battery cells 300 and allows regions for accommodating the battery cells 300 to be implemented through a convenient assembly method.

In some implementations, the first coupling portion 110 based on one aspect of the disclosed technology may be provided on the one surface 100a-1 in the inner space 100a, and the one surface 100a-1 may include one or more edges 100a-1E. Due to the edges 100a-1E, a closed area in which the first coupling portion 110 may be provided may be formed. In some implementations, the edges 100a-1E may indicate boundaries of the one surface 100a-1 itself or indicate boundary lines between the one surface 100a-1 and the other surfaces 100a-c.

In some implementations, the edges 100a-1E may be straight or curved. When the edges 100a-1E are straight, the number of edges 100a-1E may be calculated based on whether the directions and positions of the straight lines are different, and when the edges 100a-1E are curved, the number of edges 100a-1E may be calculated based on whether the curvatures and positions of the curved lines are different. Here, the positions may be described as different from each other when any one edge 100a-1E should be moved to overlap another edge 100a-1E in the same coordinate system. For example, referring to FIG. 5, the one surface 100a-1 of the accommodating portion 100 has four straight lines with different directions and positions and thus may be described as including four straight edges 100a-1E.

In the accommodating portion 100 based on one aspect of the disclosed technology, one or more first coupling portions 110 may be provided along each edge 100a-1E. Here, being provided along the edge 100a-1E means being provided parallel to the edge 100a-1E.

In some implementations, the one surface 100a-1 based on one aspect of the disclosed technology may include a plurality of edges 100a-1E. In some implementations, the one surface 100a-1 may include one or more pairs of edges 100a-1E that face each other.

Referring to FIG. 5, the one surface 100a-1 includes two x edges 100a-1Ex that are parallel to the X-axis and two y edges 100a-1Ey that are parallel to the Y-axis. That is, referring to FIG. 5, the one surface 100a-1 includes two pairs of edges 100a-1E that face each other and includes a total of four straight edges 100a-1E. In some implementations, referring to FIG. 5, seven first coupling portions 110 are provided along each x edge 100a-1Ex, and five first coupling portions 110 are provided along each y edge 100a-1Ey.

Referring to FIG. 5, the numbers and positions of the first coupling portions 110 provided along the edges 100a-1E that face each other may correspond to each other. That is, the number and positions of the first coupling portions 110 provided along one x edge 100a-1Ex and the number and positions of the first coupling portions 110 provided along the other x edge 100a-1Ex that faces the one x edge 100a-1Ex may correspond to each other. Here, "correspond" may mean that the numbers of first coupling portions 110 are the same, and the positions thereof are symmetrical. When the numbers and positions of the first coupling portions 110 provided along the edges 100a-1E that face each other correspond to each other in this way, it may be advantageous in implementing regions for accommodating the battery cells 300 through a convenient assembly method. However, this is only an example, and the numbers and positions of the first coupling portions 110 may vary based on design.

Referring to FIG. 4, the first coupling portion 110 based on one aspect of the disclosed technology may be provided on the one surface 100a-1 in the inner space 100a and may be provided with a predetermined gap d3 from an edge 100a-1E of the one surface 100a-1 that is adjacent thereto. Here, the edge 100a-1E adjacent thereto may be the edge 100a-1E that is the closest to the first coupling portion 110 while facing the first coupling portion 110. In some implementations, the size of the gap d3 may be determined based on the shape or size of the second coupling portion 220 of the insert 200 which will be described below.

When the case in which the edges 100a-1E indicate boundary lines between the one surface 100a-1 and the other surfaces 100a-c adjacent thereto is included, the above-described predetermined gap d2 between the first coupling portion 110 and the other surface 100a-c adjacent thereto and the predetermined gap d3 between the first coupling portion 110 and the edge 100a-1E adjacent thereto may be the same.

When the predetermined gap d3 is present between the first coupling portion 110 and the edge 100a-1E adjacent thereto, it is possible to provide the battery storage tray 10 that can accommodate various types (e.g., multiple models) or sizes of battery cells 300 and allows regions for accommodating the battery cells 300 to be implemented through a convenient assembly method.

Specifically, referring to FIG. 4, the auxiliary coupling portions 111 based on one aspect of the disclosed technology may be provided on the one surface 100a-1 in the inner space 100a and may be provided with the predetermined gap d3 from an edge 100a-1E of the one surface 100a-1 that is adjacent thereto.

In the disclosed technology, as described above, the sizes of the above-described gaps d1, d2, and d3 may be determined based on the shape or size of the second coupling portion 220 of the insert 200 which will be described below. In some implementations, representative values of the gaps d1, d2, and d3 may indicate average values when the values are not constant due to varying the position at which measurement is performed or the object to be measured. For example, referring to FIG. 4, a plurality of auxiliary coupling portions 111 may be provided, and the gap d3 between the auxiliary coupling portion 111 and the edge 100a-1E adjacent thereto may be the same or different for each auxiliary coupling portion 111. When the gap d3 between each auxiliary coupling portion 111 and the edge 100a-1E adjacent thereto is the same, the size thereof may be a representative value of the gap d3, and when the gap d3 between the auxiliary coupling portion 111 and the edge 100a-1E adjacent thereto is different in one or more auxiliary coupling portions 111, the size of an arithmetic mean of the gaps d3 may be a representative value of the gap d3.

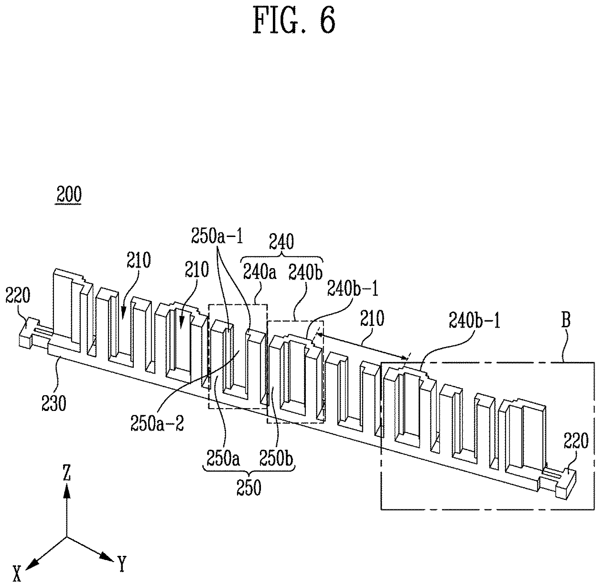

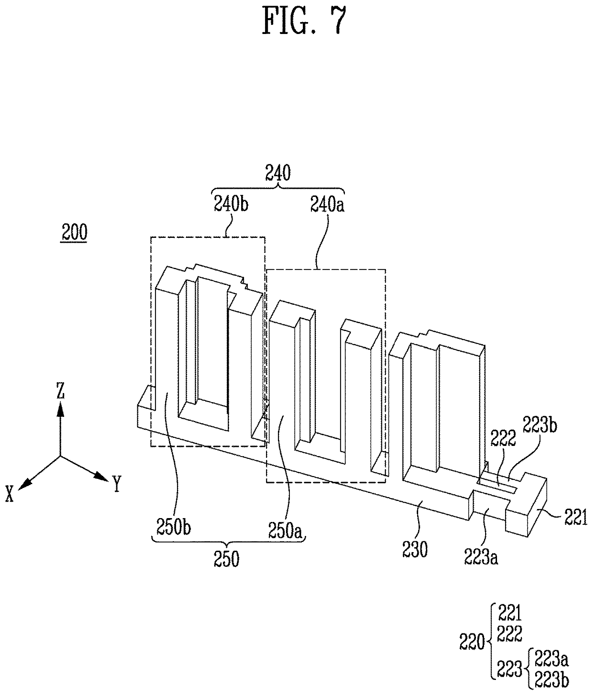

FIG. 6 is a perspective view schematically illustrating the insert 200 of the battery storage tray 10 based on one embodiment of the disclosed technology. FIG. 7 is a perspective view schematically illustrating a portion of the insert 200 of the battery storage tray 10 based on one embodiment of the disclosed technology. Specifically, FIG. 7 is an enlarged view of region B of FIG. 6.

The battery cells 300 may be housed in the insert 200 of the battery storage tray 10 based on one aspect of the disclosed technology. In the battery storage tray 10, the insert 200 may be coupled to the accommodating portion 100 to form regions for accommodating the battery cells 300, and the battery cells 300 may be housed in the regions for accommodating the battery cells 300 (battery storage portions 260 to be described below, see FIG. 8). The battery storage tray 10 in which the battery cells 300 are housed may be mainly used in the activation process or the like.

The insert 200 based on one aspect of the disclosed technology may include a plastic material. The structure of the insert 200 may be designed appropriately in consideration of the type or size of the battery cells 300 to be accommodated. In some implementations, structures of components such as the second coupling portion 220 of the insert 200, which will be described below, may also be appropriately designed. Through the design, the insert 200 may be implemented by injection molding or the like.

The insert 200 based on one aspect of the disclosed technology may include storage grooves 210. The storage grooves 210 may be grooves for accommodating at least a portion of each battery cell 300. In some implementations, when a plurality of inserts 200 are arranged and combined, the storage grooves 210 may allow the battery storage tray 10 to have the battery storage portions 260 for accommodating the battery cells 300 (see FIG. 8).

In some implementations, the insert 200 based on one aspect of the disclosed technology may include the second coupling portion 220 that may be coupled to the first coupling portion 110 included in the accommodating portion 100. That is, when the insert 200 is embedded in the accommodating portion 100, the first coupling portion 110 and the second coupling portion 220 may be coupled, and the insert 200 may be fixed to the inner space 100a of the accommodating portion 100. Conversely, the first coupling portion 110 and the second coupling portion 220 coupled to each other may be decoupled, and due to the decoupling thereof, the accommodating portion 100 and the insert 200 may be separated.

In some implementations, the insert 200 based on one aspect of the disclosed technology may include the second coupling portion 220 configured to be coupled to one or more auxiliary coupling portions 111 selected from the plurality of auxiliary coupling portions 111 included in one first coupling portion 110. That is, one first coupling portion 110 may include a plurality of auxiliary coupling portions 111 as described above (see FIGS. 2 to 5), and the second coupling portion 220 of the insert 200 may be coupled to one or more of the plurality of auxiliary coupling portions 111. When the second coupling portion 220 is coupled to one or more of the plurality of auxiliary coupling portions 111, the insert 200 may be coupled and fixed to the accommodating portion 100. Details of coupling between the first coupling portion 110 of the accommodating portion 100 and the second coupling portion 220 of the insert 200 will be described below.

The insert 200 based on one aspect of the disclosed technology may include a support body 230 having the second coupling portion 220. The second coupling portion 220 may be provided at an appropriate position on the support body 230 for space utilization when the insert 200 is coupled to the accommodating portion 100 and the battery cells 300 are housed. In some implementations, the insert 200 may include a plurality of second coupling portions 220 for stable coupling with the accommodating portion 100.

Referring to FIG. 6, the insert 200 based on one aspect of the disclosed technology may include the support body 230 having the second coupling portions 220 provided at both ends. The support body 230 is a component for supporting each component of the insert 200 and may have a shape that is long in the longitudinal direction, and for example, may have the shape of a beam or a pipe but is not limited thereto. That is, referring to FIG. 6, in the support body 230 having the shape that is long in the longitudinal direction along the Y-axis, the second coupling portions 220 may be positioned at both ends along the Y-axis.

In some implementations, the second coupling portions 220 may be integrally formed with the support body 230 and may be joined and coupled thereto by welding, adhesion, or hardware (bolts or the like). Preferably, when the structure of the insert 200 is implemented by injection molding or the like, the second coupling portions 220 and the support body 230 may be integrally formed.

The insert 200 based on one aspect of the disclosed technology may include a plurality of storage frame portions 240 disposed on the support body 230 and including a bent member 250 that is at least partially bent. Referring to FIG. 6, a plurality of bent members 250 each of which is at least partially bent may be provided on the support body 230, and in this way, the insert 200 may also include the plurality of storage frame portions 240 including the bent members 250. Specifically, referring to FIG. 6, the bent members 250 may protrude from one surface of the support body 230.

In some implementations, the bent members 250 may be integrally formed with the support body 230 and may be joined and coupled thereto by welding, adhesion, or hardware (bolts or the like). Preferably, when the structure of the insert 200 is implemented by injection molding or the like, the bent members 250 and the support body 230 may be integrally formed.

In some implementations, the storage grooves 210 may be provided in the storage frame portions 240 of the insert 200 based on one aspect of the disclosed technology through the structures of the bent members 250. Referring to FIG. 6, the storage frame portion 240 may include one bent member 250 or a plurality of bent members 250 and may have various forms of storage grooves 210 based on the structures of the bent members 250.

Referring to FIG. 6, the number of times the bent member 250 is bent and the direction in which the bent member 250 is bent may be independent for each bent member 250 provided on the support body 230. The number of times the bent member 250 is bent and the direction in which the bent member 250 is bent may be designed appropriately in consideration of the type or size of the battery cells 300 to be accommodated.

In some implementations, the insert 200 based on one aspect of the disclosed technology may include the plurality of storage frame portions 240, and the structure and shape of the storage frame portion 240 may be independent for each storage frame portion 240. The storage frame portions 240 may include a first storage frame portion 240a including a plurality of first bent members 250a and a second storage frame portion 240b including a single second bent member 250b. That is, the bent members 250 may include one or more selected from the group consisting of the plurality of first bent members 250a and the single second bent member 250b. Here, the ordinals added to the beginning of "first bent members 250a" and "second bent member 250b" are simply added for distinguishing the two, regardless of the order or importance.

In the insert 200 based on one aspect of the disclosed technology, the first storage frame portion 240a may include the storage groove 210 due to the plurality of first bent members 250a. Referring to FIG. 6, in the first storage frame portion 240a, the plurality of first bent members 250a may be provided while spaced apart from each other, and bent portions of the first bent members 250a may be arranged to face each other. Referring to FIG. 6, the bent portions may be protruding portions 250a-1. Referring to FIG. 6, when the protruding portions 250a-1 of the first bent members 250a are arranged to face each other as described above, the storage groove 210 may be formed naturally. In some implementations, when the protruding portions 250a-1 of the first bent members 250a are arranged to face each other while the plurality of first bent members 250a are spaced apart from each other as described above, a passage region 250a-2 may be formed between the protruding portions 250a-1.

Here, although the first storage frame portion 240a has been defined as the storage frame portion 240 including the plurality of first bent members 250a, the storage frame portion 240 having the passage region 250a-2 formed therein as described above may be the first storage frame portion 240a.

In some implementations, a separation gap between the plurality of first bent members 250a may be determined based on the shape and size of the battery cells 300.

In the insert 200 based on one aspect of the disclosed technology, the second storage frame portion 240b may include the storage groove 210 due to the single second bent member 250b. Referring to FIG. 6, in the second storage frame portion 240b, the single second bent member 250b may be provided, and the second bent member 250b may have a shape that is bent multiple times. The positions at which the second bent member 250b is bent and the number of times the second bent member 250b is bent may be determined based on the shape and size of the battery cells 300. That is, the second bent member 250b may be bent multiple times and form the storage groove 210 in which at least a portion of the battery cell 300 may be housed.

In some implementations, the second storage frame portion 240b may include a protruding portion 240b-1 that protrudes more than the first storage frame portion 240a due to the bent shape of the second bent member 250b. Referring to FIG. 6, the second storage frame portion 240b includes the protruding portion 240b-1 that protrudes more than the first storage frame portion 240a, and the protruding portion 240b-1 protrudes in the negative X-axis direction. Here, when a direction indicated by an arrow of the X-axis shown in the drawings is the positive X-axis direction, the negative X-axis direction may be a direction that is 180° from the positive X-axis direction.

In some implementations, referring to FIG. 6, since the single second bent member 250b is bent multiple times to form the storage groove 210, components such as the passage region 250a-2 formed due to the plurality of first bent members 250a may not be formed. Here, although the second storage frame portion 240b has been defined as the storage frame portion 240 including the single second bent member 250b, the storage frame portion 240 in which components such as the passage region 250a-2 are not formed, unlike in the first storage frame portion 240a, as described above may be the second storage frame portion 240b.

In some implementations, referring to FIG. 6, the insert 200 based on one aspect of the disclosed technology may include the first storage frame portion 240a and the second storage frame portion 240b. In some implementations, the insert 200 may include the first storage frame portion 240a and the second storage frame portion 240b and may include a structure in which the first storage frame portion 240a and the second storage frame portion 240b are sequentially arranged. That is, the insert 200 may include a structure in which, in the support body 230 having a shape that is long in the longitudinal direction, the first storage frame portion 240a and the second storage frame portion 240b are sequentially arranged while spaced apart from each other in the longitudinal direction of the support body 230. Here, a separation gap between the first storage frame portion 240a and the second storage frame portion 240b may be determined based on the shape and size of the battery cells 300.

Referring to FIG. 6, the number of structures in which the first storage frame portion 240a and the second storage frame portion 240b are sequentially arranged while spaced apart from each other may be plural. Here, the separation gap between the first storage frame portion 240a and the second storage frame portion 240b may be independent for each structure. For example, the separation distances may be the same as or different from each other. In consideration of space efficiency, the number of structures in which the first storage frame portion 240a and the second storage frame portion 240b are sequentially arranged while spaced apart from each other may be plural, and the separation gap between the first storage frame portion 240a and the second storage frame portion 240b may be the same for each structure.

In some implementations, referring to FIG. 6, the number of structures in which the first storage frame portion 240a and the second storage frame portion 240b are sequentially arranged while spaced apart from each other may be plural, and an appropriate separation distance may also be present between the structures that are sequentially arranged. Here, the separation distances may be independent from one another, and for example, the separation distances may be the same as or different from one another. In consideration of space efficiency, the separation distances between the sequentially arranged structures may be the same.

Specifically, for example, referring to FIG. 6, the support body 230 has the shape that is long in the direction along the Y-axis, and the insert 200 includes a plurality of structures in which the first storage frame portion 240a and the second storage frame portion 240b are sequentially arranged in this order in the direction along the Y-axis. In some implementations, referring to FIG. 6, the insert 200 may continuously include the structures in which the first storage frame portion 240a and the second storage frame portion 240b are sequentially arranged in this order. Here, "may continuously include" may mean that the structure in which the first storage frame portion 240a and the second storage frame portion 240b are sequentially arranged in this order is repeated at least two or more times. For example, the first storage frame portion 240a, the second storage frame portion 240b, the first storage frame portion 240a, the second storage frame portion 240b, and the first storage frame portion 240a may be sequentially arranged in this order.

In some implementations, separation distances between different pairs of the first storage frame portion 240a and the second storage frame portion 240b may be independent from one another and may be the same as each other referring to FIG. 6.

In some implementations, the insert 200 may include a plurality of structures in which the first storage frame portion 240a and the second storage frame portion 240b are sequentially arranged while spaced apart from each other and may continuously include the structures that are sequentially arranged. Here, the separation distances between the sequentially arranged structures may be independent from one another and may be the same as each other referring to FIG. 6. In some implementations, the insert 200 may include the structure in which the first storage frame portion 240a and the second storage frame portion 240b are sequentially arranged in this order or may continuously include structures in which the first storage frame portion 240a and the second storage frame portion 240b are sequentially arranged in this order, but it is not necessary for the insert 200 to start with the first storage frame portion 240a or end with the second storage frame portion 240b. The structure of the insert 200 may be determined based on the shape and size of the battery cells 300.

Referring to FIG. 6, the insert 200 includes a structure in which the first storage frame portion 240a, the second storage frame portion 240b, the first storage frame portion 240a, the second storage frame portion 240b, and the first storage frame portion 240a, the second storage frame portion 240b, and the first storage frame portion 240a are sequentially arranged in this order. That is, referring to FIG. 6, the insert 200 may include the structure in which the first storage frame portion 240a and the second storage frame portion 240b are sequentially arranged in this order and may also include a structure in which such structures are continuously arranged.

When the insert 200 includes the structure in which the first storage frame portion 240a and the second storage frame portion 240b are sequentially arranged in this order as described above, it is possible to provide the battery storage tray 10 that can accommodate various types (e.g., multiple models) or sizes of battery cells 300 and allows regions for accommodating the battery cells 300 to be implemented through a convenient assembly method.

In some implementations, when the insert 200 continuously includes the structures in which the first storage frame portion 240a and the second storage frame portion 240b are sequentially arranged in this order, the storage groove 210 may be provided due to protruding portions 240b-1 of one second storage frame portion 240b and another second storage frame portion 240b adjacent thereto. Referring to FIG. 6, the storage groove 210 in which at least a portion of the battery cell 300 may be housed may be provided between adjacent second storage frame portions 240b, each of which includes the protruding portion 240b-1 protruding in the negative X-axis direction.

That is, the insert 200 may include the storage frame portion 240 in which the storage groove 210 is provided by the bent member 250 itself. For example, the first storage frame portion 240a may have the storage groove 210 provided therein by the plurality of first bent members 250a, and the second storage frame portion 240b may have the storage groove 210 provided therein by the single second bent member 250b. In some implementations, the insert 200 may have the storage groove 210 provided between the protruding portions 240b-1 of the second storage frame portions 240b when the first storage frame portions 240a and the second storage frame portions 240b are arranged appropriately.

The insert 200 based on one aspect of the disclosed technology may include the second coupling portion 220 that has an appropriate shape in consideration of the shape and size of the first coupling portion 110 of the accommodating portion 100. Referring to FIG. 6, the second coupling portion 220 may be provided at the support body 230, and specifically, the second coupling portions 220 may be positioned at both ends of the support body 230.

Referring to FIG. 7, in the insert 200 based on one aspect of the disclosed technology, the second coupling portion 220 may include a fixed portion 221. As will be described below, the fixed portion 221 may pass through the gap d2 between the first coupling portion 110 and the other surface 100a-c adjacent thereto. That is, a portion of the second coupling portion 220 may pass through the gap d2 between the first coupling portion 110 and the other surface 100a-c adjacent thereto as described above (see FIG. 2), and the portion of the second coupling portion 220 may be the fixed portion 221. When the fixed portion 221 passes through the gap d2, the accommodating portion 100 and the insert 200 may be more stably coupled.

In some implementations, the fixed portion 221 may pass through the predetermined gap d3 between the first coupling portion 110 and the edge 100a-1E adjacent thereto. That is, a portion of the second coupling portion 220 may pass through the predetermined gap d3 between the first coupling portion 110 and the edge 100a-IE adjacent thereto, and the portion of the second coupling portion 220 may be the fixed portion 221. When the fixed portion 221 passes through the gap d3, the accommodating portion 100 and the insert 200 may be more stably coupled.

In some implementations, when the case in which the edges 100a-1E indicate boundary lines between the one surface 100a-1 and the other surfaces 100a-c adjacent thereto is included as described above, since the above-described predetermined gap d2 between the first coupling portion 110 and the other surface 100a-c adjacent thereto and the predetermined gap d3 between the first coupling portion 110 and the edge 100a-1E adjacent thereto are the same, the fixed portion 221 may pass through both the gap d2 and the gap d3.

In some implementations, referring to FIG. 7, in the insert 200 based on one aspect of the disclosed technology, the second coupling portion 220 may include a coupling through-hole 222. At least a portion of the first coupling portion 110 may pass through the coupling through-hole 222 and fix the insert 200 and the accommodating portion 100. Specifically, the first coupling portion 110 provided to protrude from the one surface 100a-1 of the accommodating portion 100 may pass through the coupling through-hole 222 of the insert 200.

In some implementations, referring to FIG. 7, in the insert 200 based on one aspect of the disclosed technology, the second coupling portion 220 may include a connecting portion 223. The connecting portion 223 may mechanically connect the support body 230 and the fixed portion 221 and form the coupling through-hole 222. The second coupling portion 220 may include a plurality of connecting portions 223. That is, referring to FIG. 7, the second coupling portion 220 may include a first connecting portion 223a and a second connecting portion 223b. Here, the ordinals added to the beginning of "first connecting portion 223a" and "second connecting portion 223b" are simply added for distinguishing the two, regardless of the order or importance. The first connecting portion 223a and the second connecting portion 223b may be configured to mechanically connect the support body 230 and the fixed portion 221 and face each other while spaced apart from each other, and the coupling through-hole 222 may be provided between the first connecting portion 223a and the second connecting portion 223b.

In some implementations, in the insert 200 based on one aspect of the disclosed technology, a portion of the second coupling portion 220 may pass through the gap d1 between the auxiliary coupling portions 111. Here, the portion of the second coupling portion 220 may be the connecting portion 223 described above, and the connecting portion 223 may pass through the gap d1. Specifically, the connecting portion 223 may also pass through a gap between the auxiliary coupling portion 111 and the sidewall 120 as well as the gap d1 between the auxiliary coupling portions 111. When the connecting portion passes through the above-described gaps, the accommodating portion 100 and the insert 200 may be more stably coupled.

FIG. 8 is a perspective view schematically illustrating an example of the battery storage tray 10 based on one embodiment of the disclosed technology. FIG. 8 is a view illustrating a state in which the plurality of inserts 200 are coupled to the accommodating portion 100 in FIG. 1.

Referring to FIG. 8, the accommodating portion 100 and the plurality of inserts 200 are coupled to each other, and as will be described below, the battery storage portions 260 for accommodating the battery cells 300 may be provided due to the inserts 200 coupled to the accommodating portion 100. The sizes of the battery storage portions 260 may be determined based on the sizes of the storage grooves 210 of the inserts 200, and the sizes of the storage grooves 210 may be designed in consideration of the sizes of the battery cells 300. A single battery storage portion 260 or a plurality of battery storage portions 260 may be provided, and the housed battery cells 300 may be equal in number to the battery storage portions 260.

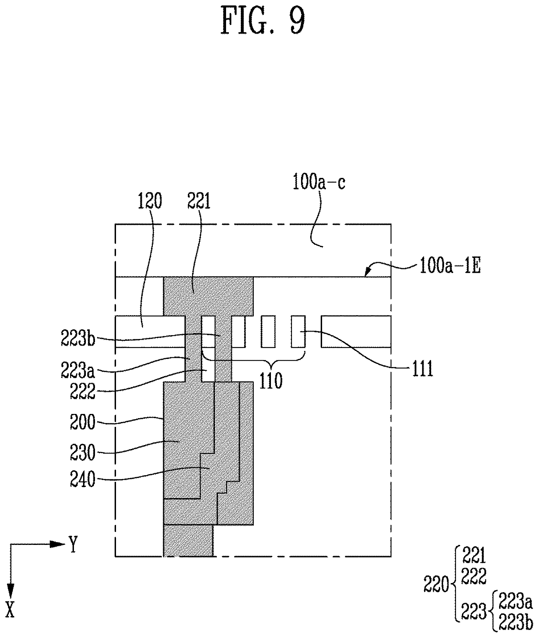

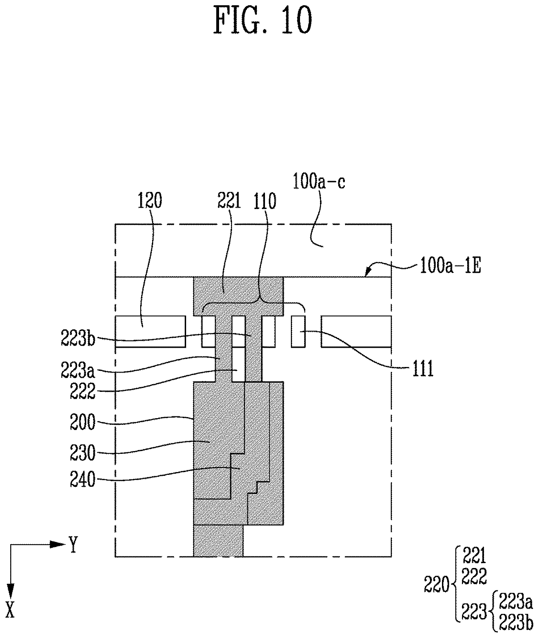

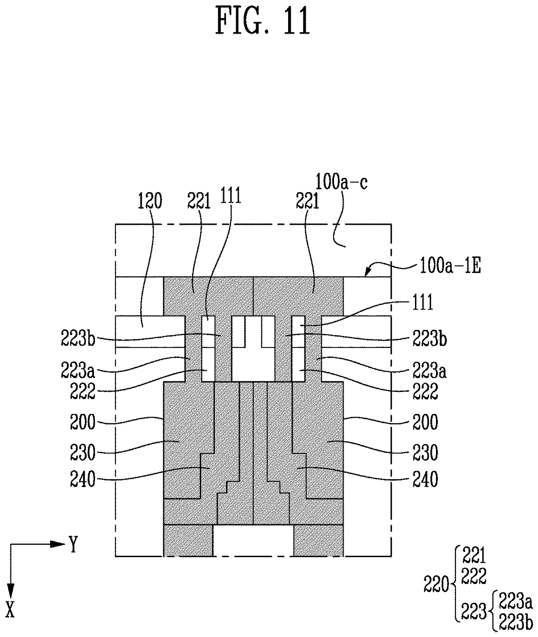

FIG. 9 schematically illustrates an example of the battery storage tray 10 based on one embodiment of the disclosed technology. Specifically, FIG. 9 is an XY plan view of FIG. 8. FIG. 10 schematically illustrates an example of the battery storage tray 10 based on one embodiment of the disclosed technology. Specifically, FIG. 10 is an XY plan view of FIG. 8. FIG. 11 schematically illustrates an example of the battery storage tray 10 based on one embodiment of the disclosed technology. Specifically, FIG. 11 is an XY plan view of FIG. 8.

Hereinafter, how the accommodating portion 100 and the inserts 200 are coupled to each other will be described in detail with reference to FIGS. 9 to 11.

Referring to FIG. 9, the second coupling portion 220 of the insert 200 may be coupled to the first coupling portion 110. Referring to FIG. 1, the inserts 200 may slide downward in the negative Z-axis direction and be coupled to the accommodating portion 100. Specifically, the first coupling portion 110 and the second coupling portion 220 may be coupled to each other as one or more of the auxiliary coupling portions 111 of the first coupling portion 110 that protrude to have an appropriate height from the one surface 100a-1 in the inner space 100a pass through the coupling through-hole 222 of the second coupling portion 220.

In some implementations, referring to FIG. 9, the fixed portion 221 of the second coupling portion 220 may pass through the gap d2 between the first coupling portion 110 and the other surface 100a-c adjacent thereto. In some implementations, referring to FIG. 9, the fixed portion 221 may also pass through the predetermined gap d3 between the first coupling portion 110 and the edge 100a-1E adjacent thereto.

In some implementations, referring to FIG. 9, the connecting portions 223 of the second coupling portion 220 may pass through the gap d1 between the auxiliary coupling portions 111 and the gap between the auxiliary coupling portion 111 and the sidewall 120. Specifically, the first connecting portion 223a of the connecting portions 223 may pass through the gap between the auxiliary coupling portion 111 and the sidewall 120, and the second connecting portion 223b may pass through the gap d1 between the auxiliary coupling portions 111.

Referring to FIG. 9, the first coupling portion 110 and the second coupling portion 220 may be coupled to each other through the above method.

Referring to FIG. 10, the auxiliary coupling portion 111 that passes through the coupling through-hole 222 may be changed. The insert 200 based on one embodiment of the disclosed technology may include the second coupling portion 220 configured to be coupled to one or more auxiliary coupling portions 111 selected from the plurality of auxiliary coupling portions 111 included in one first coupling portion 110. That is, the second coupling portion 220 of the insert 200 may be coupled to one or more auxiliary coupling portions 111 selected from the plurality of auxiliary coupling portions 111, in consideration of the type or size of the battery cells 300. When the auxiliary coupling portion 111 that passes through the coupling through-hole 222 is changed, the size (width, length, and the like) of the battery storage portion 260 to be described below (see FIG. 8) may be changed. That is, the size of the battery storage portion 260 may be designed in consideration of the type or size of the battery cells 300 to be housed in the battery storage tray 10, and the size of the battery storage portion 260 may vary based on the auxiliary coupling portion 111 that passes through the coupling through-hole 222.

Referring to FIG. 10, the second coupling portion 220 of the insert 200 may be coupled to the first coupling portion 110 by the method shown in FIG. 9. However, the connecting portions 223 of the second coupling portion 220 pass through the gaps d1 between the auxiliary coupling portions 111. That is, the first connecting portion 223a of the connecting portions 223 may pass through the gap d1 between one pair of auxiliary coupling portions 111, and the second connecting portion 223b may pass through the gap d1 between another pair of auxiliary coupling portions 111.

Referring to FIGS. 9 and 10, the first coupling portion 110 and the second coupling portion 220 may be coupled to each other through the above method.

Referring to FIG. 11, the plurality of inserts 200 may be coupled to the first coupling portion 110. Specifically, referring to FIG. 11, the plurality of second coupling portions 220 may be coupled to the first coupling portion 110. Here, the plurality of inserts 200 coupled to one first coupling portion 110 may have or not have certain intervals therebetween. That is, the plurality of inserts 200 may at least partially come in contact with each other or not come in contact with each other. In some implementations, as described above, the inserts 200 may be implemented by injection molding or the like. In consideration of an injection molding tolerance that occurs in the injection molding process or an assembly tolerance that occurs when coupling the plurality of inserts 200 to the first coupling portion 110, the plurality of inserts 200 may be coupled to the first coupling portion 110 while spaced apart at minimum intervals from each other. When the plurality of inserts 200 are coupled to the first coupling portion 110 while spaced apart at minimum intervals from each other, it may be easier to couple and decouple the inserts 200 and the first coupling portion 110 to and from each other, and damage to the inserts 200 or the first coupling portion 110 may be minimized. In another example, referring to FIG. 11, when there is no injection molding tolerance or assembly tolerance, the plurality of inserts 200 may be in contact with each other in consideration of space utilization. However, the relationship between the plurality of inserts 200 is not limited to the above.

In some implementations, referring to FIG. 11, when the plurality of inserts 200 are coupled to the first coupling portion 110, at least two inserts 200 may have structures symmetrical to each other. For example, referring to FIG. 11, two inserts 200 coupled to the first coupling portion 110 have structures that are symmetrical to each other about the X-axis. When at least two inserts 200 among the plurality of inserts 200 coupled to the first coupling portion 110 have structures symmetrical to each other as described above, the battery storage portion 260 to be described below may be provided in the battery storage tray 10.

In some implementations, referring to FIG. 11, when the plurality of inserts 200 are coupled to the first coupling portion 110, the battery storage tray 10 may efficiently utilize space and store more battery cells 300.

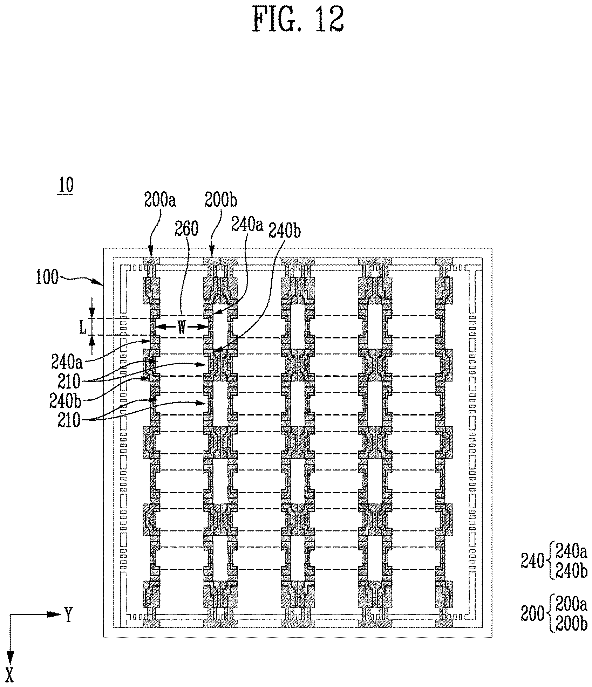

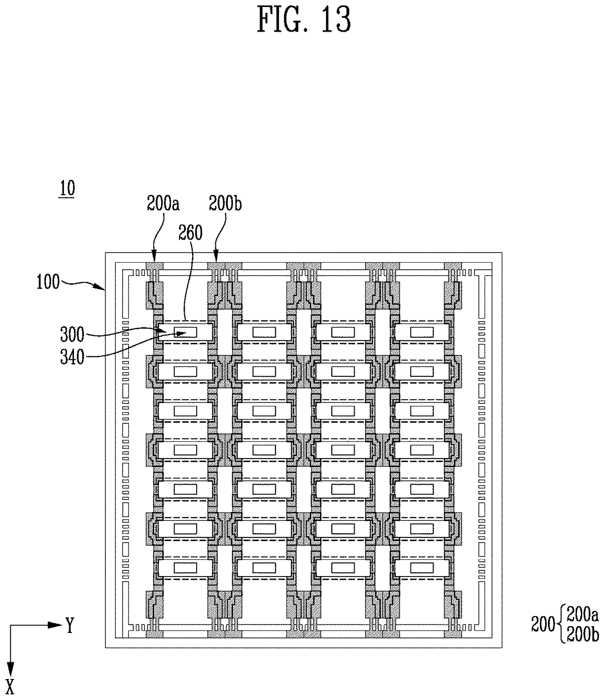

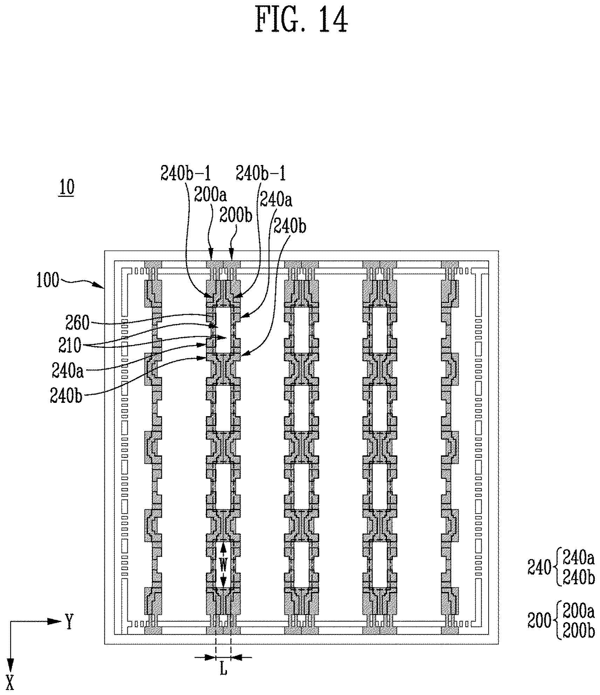

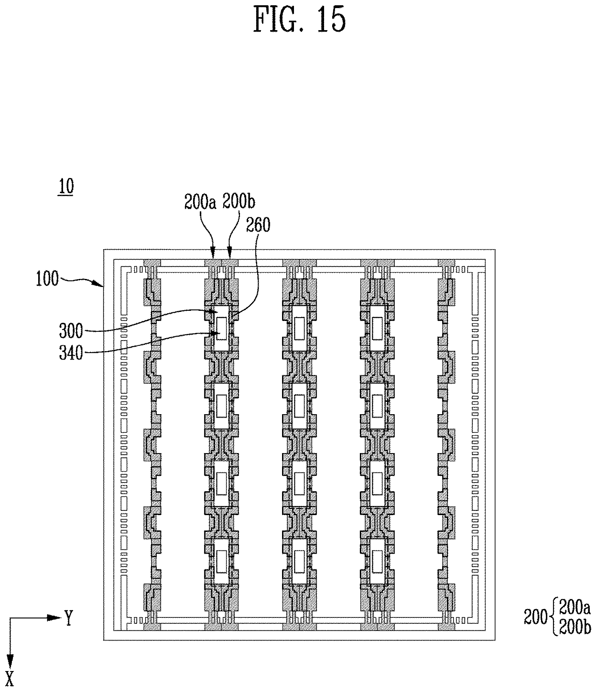

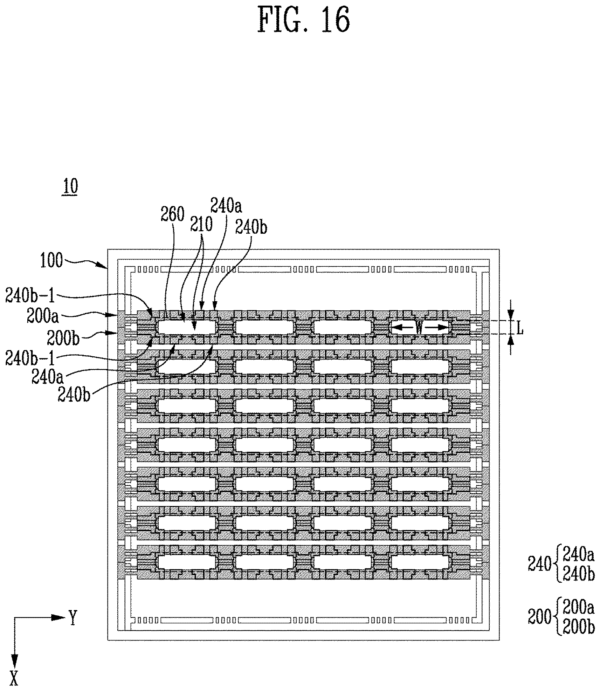

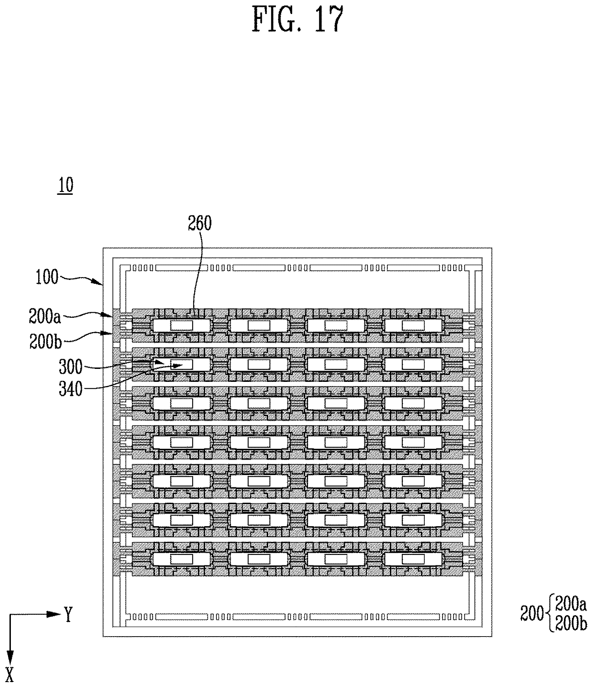

FIG. 12 schematically illustrates an example of the battery storage tray 10 based on one embodiment of the disclosed technology. Specifically, FIG. 12 is an XY plan view of FIG. 8. FIG. 13 is an XY plan view schematically illustrating examples of the battery cells 300 housed in the battery storage tray 10 based on one embodiment of the disclosed technology. FIG. 14 schematically illustrates the battery storage tray 10 based on one embodiment of the disclosed technology and is an XY plan view of FIG. 8. FIG. 15 is an XY plan view schematically illustrating examples of the battery cells 300 housed in the battery storage tray 10 based on one embodiment of the disclosed technology. FIG. 16 is an XY plan view schematically illustrating an example of the battery storage tray 10 based on one embodiment of the disclosed technology. FIG. 17 is an XY plan view schematically illustrating examples of the battery cells 300 housed in the battery storage tray 10 based on one embodiment of the disclosed technology.

In the battery storage tray 10 based on one aspect of the disclosed technology, the inserts 200 may be provided across the inner space 100a of the accommodating portion 100. Referring to FIGS. 1 and 8, the inserts 200 may be provided across the inner space 100a of the accommodating portion 100. In some implementations, referring to FIG. 8, the inserts 200 may be provided across the inner space 100a of the accommodating portion 100 in the X-axis direction.

In the battery storage tray 10 based on one aspect of the disclosed technology, the inserts 200 may be provided across the inner space 100a of the accommodating portion 100 in one specific direction. Referring to FIG. 12, one or more inserts 200 may be provided across the inner space 100a of the accommodating portion 100 in the X-axis direction.

The battery storage tray 10 based on one aspect of the disclosed technology may include the plurality of inserts 200 as described above. In some implementations, at least two or more of the plurality of inserts 200 may be provided across the inner space 100a of the accommodating portion 100 in the same direction. In some implementations, all of the plurality of inserts 200 may be provided across the inner space 100a of the accommodating portion 100 in the same direction. When all of the plurality of inserts 200 are provided in the same direction, the battery storage tray 10 may efficiently utilize space and store more battery cells 300.

In some implementations, in the battery storage tray 10 based on one aspect of the disclosed technology, the plurality of inserts 200 may include a first insert 200a and a second insert 200b, and the first insert 200a and the second insert 200b may be positioned adjacent to each other while having structures symmetrical to each other. Here, the ordinals added to the beginning of "first insert 200a" and "second insert 200b" are simply added for distinguishing the two, regardless of the order or importance. In some implementations, the first insert 200a and the second insert 200b having structures symmetrical to each other may mean that the first insert 200a and the second insert 200b are symmetrical about the direction across the inner space 100a at the center between the first insert 200a and the second insert 200b (when the first insert 200a and the second insert 200b are in contact, a contact line thereof). In some implementations, the first insert 200a and the second insert 200b being adjacent to each other may mean that another insert 200 is not present between the first insert 200a and the second insert 200b.

Referring to FIG. 12, the battery storage tray 10 based on one aspect of the disclosed technology may include the plurality of inserts 200. In some implementations, at least two or more or all of the plurality of inserts 200 may be provided across the inner space 100a of the accommodating portion 100 in the same direction.

In some implementations, referring to FIG. 12, in the battery storage tray 10 based on one aspect of the disclosed technology, all of the plurality of inserts 200 may be provided across the inner space 100a of the accommodating portion 100 in the X-axis direction, and the first insert 200a and the second insert 200b, which are some of the plurality of inserts 200, may be positioned adjacent to each other while having structures symmetrical to each other.

In some implementations, in the battery storage tray 10 based on one aspect of the disclosed technology, the battery storage portion 260 for accommodating the battery cell 300 may be included between the first insert 200a and the second insert 200b. The battery storage portion 260 may be positioned in a region in which the storage groove 210 of the first insert 200a and the storage groove 210 of the second insert 200b face each other.

Referring to FIG. 12, the inserts 200 based on one aspect of the disclosed technology may include the first insert 200a and the second insert 200b. In some implementations, the first insert 200a and the second insert 200b may be positioned adjacent to each other while having structures symmetrical to each other. In some implementations, the battery storage portion 260 may be positioned in a region in which the storage groove 210 provided in the first storage frame portion 240a of the first insert 200a and the storage groove 210 provided in the first storage frame portion 240a of the second insert 200b face each other.

In some implementations, referring to FIG. 12, the battery storage portion 260 may be positioned in a region in which the storage groove 210 provided in the second storage frame portion 240b of the first insert 200a and the storage groove 210 provided in the second storage frame portion 240b of the second insert 200b face each other.

In FIG. 12, based on the above description, all of the dotted boxes may represent the battery storage portions 260, and the battery cells 300 may be housed in the battery storage portions 260.

In some implementations, referring to FIG. 12, a width W and a length L of the battery storage portion 260 provided due to the storage grooves 210 of the first insert 200a and the second insert 200b may vary based on appropriate structural design of each insert 200, positions of the inserts 200 and the auxiliary coupling portions 111 to which the inserts 200 are coupled, and the like. That is, by changing the structural design, coupling positions, and the like of the inserts 200, the battery storage tray 10 may include the battery storage portions 260 whose width W and length L are suitable for the battery cells 300 to be housed therein. The contents related to the width W and the length L of the battery storage portions 260 are as described above, and thus description thereof will be omitted below unless contents are different.

In some implementations, here, the width W may be a size between two points on the battery storage portion 260 between which a linear distance is the largest, and the length L may be perpendicular to the width W and may be a size between two points on the battery storage portion 260 between which a linear distance is the shortest. That is, in the battery storage portion 260, the width W may be larger than the length L. In the disclosed technology, when the sizes of the width W and the length L are the same, both of them may be referred to as either the width W or the length L.

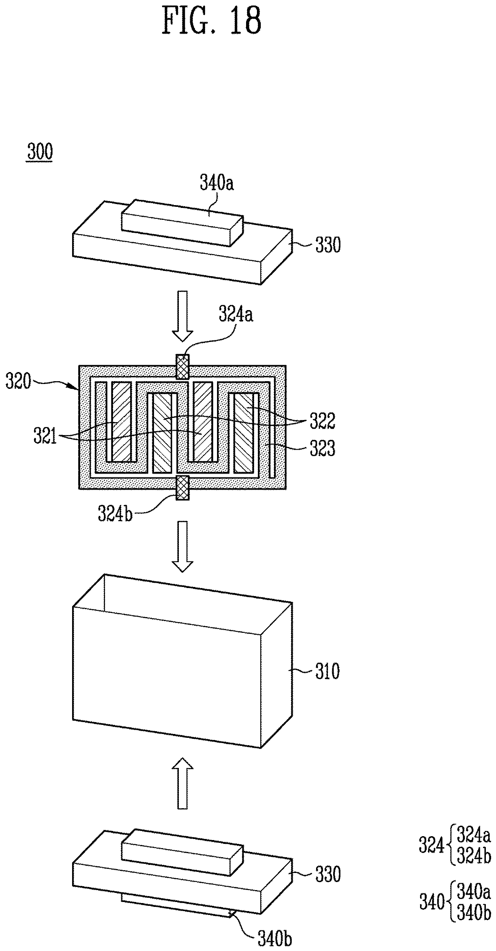

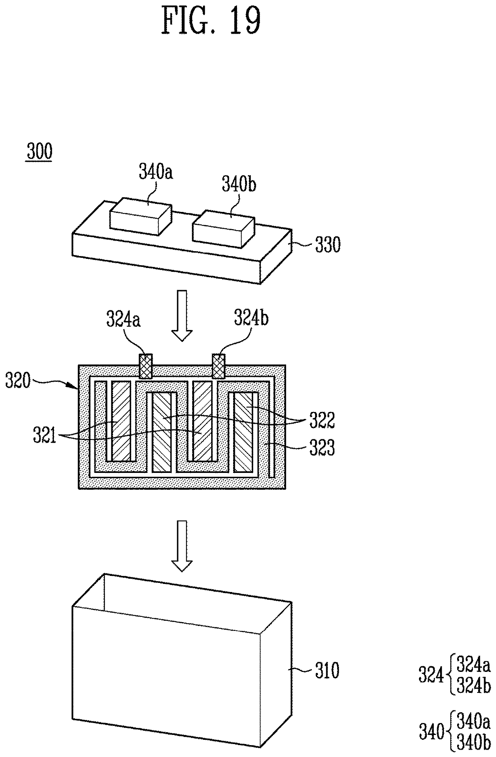

Referring to FIG. 13, a state in which all of the battery cells 300 are housed in the battery storage portions 260 illustrated in FIG. 12 is shown. The battery cells 300 may each include an outer material 310 that may have an electrode assembly 320 embedded therein. In some implementations, the battery cells 300 may each include one or more terminals 340 (see FIGS. 18 and 19) that protrude in one direction of the outer material 310 in a direction not facing the inner space 100a of the accommodating portion 100 while electrically connected to the electrode assembly 320. That is, in FIG. 13, the battery cells 300 may be housed in the battery storage portions 260 so that at least some of the terminals 340 of the battery cells 300 protrude in the positive Z-axis direction. When the terminals 340 protrude as described above, formation or testing that may be performed in the activation process may be more easily performed. For example, formation or testing that may be performed in the activation process may be more easily performed as a probe used in the formation or testing comes in contact with the protruding terminals 340. Details of the battery cells 300 will be described below.

Referring to FIG. 13, the shape of the battery storage portion 260 may be determined based on the shape of the outer material 310 of the battery cell 300 to be housed. Referring to FIG. 13, when the outer material 310 of the battery cell 300 has a hexahedral shape which is prismatic, the battery storage portion 260 may have an appropriate shape to store the hexahedral shape which is prismatic, and to this end, the storage frame portions 240 or the bent members 250 of the inserts 200 may be designed to be suitable therefor.

In some implementations, the battery cells 300 housed in the battery storage portions 260 based on one aspect of the disclosed technology may be housed in one direction. The direction may be based on the width W direction of the battery storage portions 260. That is, referring to FIG. 13, the battery cells 300 housed in the battery storage portions 260 may be described as housed in the Y-axis direction, which is the width W direction of the battery storage portions 260.

Here, when the width W and the length L of the battery storage portions 260 are the same, a direction in which the battery cells 300 are housed may be determined based on a width W direction of the battery cells 300. The width W of the battery cells 300 may be a size of a long side on a plane (XY plane) excluding a direction in which the terminals 340 of the battery cells 300 protrude (for example, the Z-axis direction). Likewise, the length L may be less than the width W and may be a size of a short side.

When the width W and the length L of the battery cells 300 are also the same, a direction in which the battery cells 300 are housed may be determined based on a width W direction of the accommodating portion 100. The width W of the accommodating portion 100 may be a size of a long side in a plane (XY plane) excluding a direction in which the terminals 340 of the battery cells 300 protrude (for example, the Z-axis direction). Likewise, the length L may be less than the width W and may be a size of a short side. In some implementations, when the width W and the length L of the accommodating portion 100 are also the same, a direction in which the battery cells 300 are housed may not be determined.

A state of the battery storage tray 10 illustrated in FIG. 14 shows that, although the battery storage tray 10 has the same structure as the battery storage tray 10 illustrated in FIG. 12, the battery storage portions 260 may be interpreted differently.

Referring to FIG. 14, as in FIG. 12, the inserts 200 may include the first insert 200a and the second insert 200b, and the first insert 200a and the second insert 200b may be positioned adjacent to each other while having structures symmetrical to each other. In some implementations, the inserts 200 in FIG. 14 continuously include structures in which the first storage frame portion 240a and the second storage frame portion 240b are sequentially arranged in this order. In such a structure, the storage groove 210 may be provided due to protruding portions 240b-1 of one second storage frame portion 240b and another second storage frame portion 240b adjacent thereto (see FIGS. 6 and 14). That is, the battery storage portion 260 may be positioned in a region in which the storage groove 210 provided due to the above-described protruding portions 240b-1 on the first insert 200a and the storage groove 210 provided due to the above-described protruding portions 240b-1 on the second insert 200b face each other.

In FIG. 14, based on the above description, all of the dotted boxes may represent the battery storage portions 260, and the battery cells 300 may be housed in the battery storage portions 260.

Referring to FIG. 15, a state in which all of the battery cells 300 are housed in the battery storage portions 260 illustrated in FIG. 14 is shown. The housed battery cells 300 may be described as housed in the X-axis direction, which is the width W direction of the battery storage portions 260.

Referring to FIGS. 13 and 15, certain directions in which the battery cells 300 are housed may allow more battery cells 300 to be housed. Referring to FIG. 13, when the battery cells 300 are housed in the Y-axis direction, a maximum of twenty-eight battery cells 300 may be housed. On the other hand, referring to FIG. 15, when the battery cells 300 are housed in the X-axis direction, a maximum of twelve battery cells 300 may be housed.

In the battery storage tray 10 based on one aspect of the disclosed technology, the inserts 200 may be provided across the inner space 100a of the accommodating portion 100 in one specific direction. Referring to FIG. 16, one or more inserts 200 may be provided across the inner space 100a of the accommodating portion 100 in the Y-axis direction. Since the inserts 200 are the same as described above except for the direction in which the inserts 200 are provided across the inner space 100a of the accommodating portion 100, further description of the inserts 200 will be omitted below.

Referring to FIG. 16, in the battery storage tray 10 based on one aspect of the disclosed technology, all of the plurality of inserts 200 may be provided across the inner space 100a of the accommodating portion 100 in the Y-axis direction, and the first insert 200a and the second insert 200b, which are some of the plurality of inserts 200, may be positioned adjacent to each other while having structures symmetrical to each other. In some implementations, the inserts 200 in FIG. 16 continuously include structures in which the first storage frame portion 240a and the second storage frame portion 240b are sequentially arranged in this order. In such a structure, the storage groove 210 may be provided due to protruding portions 240b-1 of one second storage frame portion 240b and another second storage frame portion 240b adjacent thereto (see FIGS. 6 and 16). That is, the battery storage portion 260 may be positioned in a region in which the storage groove 210 provided due to the above-described protruding portions 240b-1 on the first insert 200a and the storage groove 210 provided due to the above-described protruding portions 240b-1 on the second insert 200b face each other.

In FIG. 16, based on the above description, all of the dotted boxes may represent the battery storage portions 260, and the battery cells 300 may be housed in the battery storage portions 260.

Referring to FIG. 17, a state in which all of the battery cells 300 are housed in the battery storage portions 260 illustrated in FIG. 16 is shown. The housed battery cells 300 may be described as housed in the Y-axis direction, which is the width W direction of the battery storage portions 260. Referring to FIG. 17, when the battery cells 300 are housed in the Y-axis direction, a maximum of twenty-eight battery cells 300 may be housed.

In the battery storage tray 10 based on one aspect of the disclosed technology, the maximum number N1 of the battery cells 300 that are able to be housed in one direction when all of the plurality of inserts 200 are provided across the inner space 100a of the accommodating portion 100 in a first direction and the maximum number N2 of the battery cells 300 that are able to be housed in the one direction when all of the plurality of inserts 200 are provided across the inner space 100a of the accommodating portion 100 in a second direction may be equal to each other.

For example, referring to FIG. 13, when all of the plurality of inserts 200 are provided across the inner space 100a of the accommodating portion 100 in the X-axis direction (that is, a first direction), the maximum number N1 of the battery cells 300 that are able to be housed in the Y-axis direction (that is, one direction) may be twenty-eight. In some implementations, referring to FIG. 17, when all of the plurality of inserts 200 are provided across the inner space 100a of the accommodating portion 100 in the Y-axis direction (that is, a second direction), the maximum number N2 of the battery cells 300 that are able to be housed in the Y-axis direction (that is, the one direction) may also be twenty-eight.

In some implementations, the first direction and the second direction may be perpendicular to each other.

In the battery storage tray 10 based on one aspect of the disclosed technology, an array P1 of the battery storage portions 260 when the plurality of inserts 200 are provided across the inner space 100a of the accommodating portion 100 in the first direction to allow the maximum number N1 of the battery cells 300 to be housed and an array P2 of the battery storage portions 260 when the plurality of inserts 200 are provided across the inner space 100a of the accommodating portion 100 in the second direction to allow the maximum number N2 of the battery cells 300 to be housed may be the same as each other. In the disclosed technology, an array of the battery storage portions 260 may be positions of rows and columns of all of the battery storage portions 260 provided in the battery storage tray 10 and widths W and lengths L related to the positions.

For example, in FIG. 12, the array P1 of the battery storage portions 260 when the plurality of inserts 200 are provided across the inner space 100a of the accommodating portion 100 in the X-axis direction (that is, the first direction) to allow the maximum number N1 of the battery cells 300 to be housed is shown with dotted boxes. In some implementations, in FIG. 16, the array P2 of the battery storage portions 260 when the plurality of inserts 200 are provided across the inner space 100a of the accommodating portion 100 in the Y-axis direction (that is, the second direction) to allow the maximum number N2 of the battery cells 300 to be housed is shown with dotted boxes. Here, the array P1 and the array P2 may be the same. In this way, formation or testing that may be performed in the activation process may be more easily performed.

In some implementations, since the array P1 and the array P2 are the same, the centers of the terminals 340 of the battery cells 300 may be the same. Since the centers of the terminals 340 are the same in the same arrays P1 and P2, while performing formation or other tests, even when the type of the battery cells 300 changes, it may not be necessary to change the structures of the accommodating portion 100 and/or the inserts 200 themselves or change the position of the probe. In this way, it is possible to provide the battery storage tray 10 that can accommodate various types (e.g., multiple models) of battery cells 300 and allows regions for accommodating the battery cells 300 to be implemented through a convenient assembly method.

FIGS. 18 and 19 are exploded perspective views schematically illustrating a structure of the battery cell 300 to be housed in the battery storage tray 10 based on one embodiment of the disclosed technology.

The structure of the battery cell 300 based on one aspect of the disclosed technology may be known. The battery cell 300 may have a structure in which the outer material 310 is embedded with the electrode assembly 320 and filled with an electrolyte. In another example, the battery cell 300 may include electrodes (a cathode 321 and an anode 322) and a solid electrolyte layer, and the solid electrolyte layer may serve as a separator 323 while allowing passage of an electron transport material. Here, the electron transport material may be lithium ions (Li+). In some implementations, the battery cell 300 including the solid electrolyte layer may be an all-solid battery.

The electrode assembly 320 may include electrodes. The electrodes may be a term encompassing the cathode 321 and the anode 322. In some implementations, the electrode assembly 320 may include the separator 323 to prevent short circuit between the cathode 321 and the anode 322. The separator 323 may be interposed between the cathode 321 and the anode 322.

The electrode assembly 320 may be manufactured by winding the cathode 321, the anode 322, and the separator 323 in the shape of a sheet that is long in the vertical direction. Alternatively, the electrode assembly 320 may be manufactured by a stacking method (for example, Z-stacking method) in which the cathode 321 and the anode 322 cut into appropriate sizes are inserted between the separator 323 in the shape of a sheet that is long in the vertical direction. The electrode assembly 320 disclosed in FIGS. 18 and 19 is the electrode assembly 320 manufactured based on the stacking method, and in the disclosed technology, the method of manufacturing the electrode assembly 320 is not limited to any one method.

The cathode 321 may be a reduction electrode in which an electron transport material receives electrons when the battery cells 300 are discharged. The anode 322 is an oxidation electrode in which the electron transport material transports electrons when the battery cells 300 are discharged. In some implementations, the separator 323 is a membrane that prevents electrical short circuit between the cathode 321 and the anode 322 and allows passage of the electron transport material therethrough. Here, the electron transport material may be lithium ions (Li+).

In some implementations, the battery cell 300 may have a structure in which a space sealed by the outer material 310 is embedded with the electrode assembly 320 and filled with an electrolyte. The term "space sealed" used in the disclosed technology may mean that a space is closed to a degree in which, when a liquid material is present in the corresponding space, the liquid material does not leak to the outside.

The electrolyte is a medium that causes movement of an electron transport material (for example, lithium ions) to facilitate an electrochemical reaction between the cathode 321 and the anode 322. The electrolyte may generally include an organic solvent and a lithium salt, and the organic solvent and the lithium salt may be those known in the art.

Here, batteries are classified into various types based on the type of the electron transport material. For example, when the electron transport material is lithium (Li, including ions), the battery is referred to as a lithium-ion battery.

In some implementations, as described above, the outer material 310 may protect the electrode assembly 320 from external impact and prevent leakage of the electrolyte to the outside (that is, seal the electrolyte from the outside). The battery cells 300 may be classified into a prismatic type, a cylindrical type, and a pouch type based on the shape of the outer material 310. In the disclosed technology, the battery cells 300 being prismatic battery cells 300 may be advantageous.

In the battery cell 300 based on one aspect of the disclosed technology, the electrode assembly 320 may include tabs 324. The tabs 324 may include a cathode tab 324a electrically connected to the cathode 321 and an anode tab 324b electrically connected to the anode 322. The tabs 324 may protrude from at least one surface of the electrode assembly 320.

Referring to FIG. 18, the cathode tab 324a and the anode tab 324b may protrude in different directions. The tabs 324 in this case may be referred to as bidirectional tabs 324. In some implementations, referring to FIG. 19, the cathode tab 324a and the anode tab 324b may protrude in the same direction. The tabs 324 in this case may be referred to as unidirectional tabs 324.

The battery cell 300 based on one aspect of the disclosed technology may include a cap 330 including the terminals 340. The cap 330 may seal a surface that is open to embed the electrode assembly 320 or the like in the outer material 310 of the battery cell 300. In some implementations, the terminals 340 included in the cap 330 may be electrically connected to the tabs 324 of the electrode assembly 320 by welding or the like, and the terminals 340 may protrude from at least one surface of the cap 330. The cap 330 may be coupled to the outer material 310 and sealed, and generally, the coupling may be performed by welding. When the cap 330 and the outer material 310 are coupled, the terminals 340 may protrude from the outer material 310 in one direction.

In some implementations, referring to FIGS. 18 and 19, the cathode tab 324a may be electrically connected to a cathode terminal 340a, and the anode tab 324b may be electrically connected to an anode terminal 340b. Referring to FIG. 18, the cathode terminal 340a and the anode terminal 340b protrude in directions different from each other, and the battery cell 300 in this case may be referred to as a bidirectional battery cell 300. In some implementations, referring to FIG. 19, the cathode terminal 340a and the anode terminal 340b protrude in directions identical to each other, and the battery cell 300 in this case may be referred to as a unidirectional battery cell 300.

In one aspect of the disclosed technology, it is possible to provide a battery storage tray that can accommodate various types or sizes of battery cells. In some implementations, based on another aspect of the disclosed technology, it is possible to provide a battery storage tray in which regions for accommodating battery cells are implemented through a convenient assembly method.

The disclosed technology can be implemented for manufacturing rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to manufacture improved electrochemical devices such as a battery used in various power sources and power supplies, thereby mitigating climate changes in connection with uses of power sources and power supplies. The secondary batteries made by using the disclosed technology can be used to address various adverse effects such as air pollution and greenhouse emissions by powering electric vehicles (EVs) as alternatives to vehicles using fossil fuel-based engines and by providing battery-based energy storage systems (ESSs). Such secondary batteries may include, for example, lithium ion batteries, nickel-cadmium batteries, nickel-metal hydride batteries, and nickel-hydrogen batteries.

Only a few embodiments and examples are described. Enhancements and variations of the disclosed embodiments and other embodiments can be made based on what is described and illustrated in this patent document.

## Claims

1. A battery storage tray comprising:
an accommodating portion configured to accommodate one or more battery cells; and
one or more inserts configured to accommodate at least a portion of the one or more battery cells,
wherein the accommodating portion includes: an inner space in which the one or more inserts are embedded; and one or more first coupling portions disposed in the inner space, wherein each of the one or more first coupling portions includes a plurality of auxiliary coupling portions, and
wherein each of the one or more inserts includes: a storage groove configured to accommodate at least the portion of the one or more battery cells; and a second coupling portion coupled to one or more auxiliary coupling portions of the plurality of auxiliary coupling portions included in the one or more first coupling portions.

2. The battery storage tray of claim 1, wherein adjacent auxiliary coupling portions of the plurality of auxiliary coupling portions are spaced apart from each other by a first gap.

3. The battery storage tray of claim 2, wherein a portion of the second coupling portion passes through the first gap between the adjacent auxiliary coupling portions.

4. The battery storage tray of any one of the preceding claims, wherein the first coupling portion includes a protruding member that protrudes from one surface in the inner space and does contact other surfaces in the inner space.

5. The battery storage tray of any one of the preceding claims, wherein the first coupling portion is spaced apart from another adjacent surface by a second gap.

6. The battery storage tray of any one of the preceding claims, wherein a portion of the second coupling portion passes through the second gap between the first coupling portion and the other adjacent surface.

7. The battery storage tray of any one of the preceding claims, wherein:
the first coupling portion is disposed on one surface in the inner space, and the one surface includes one or more edges; and
one or more first coupling portions are disposed along each edge.

8. The battery storage tray of claim 7, wherein the first coupling portion is spaced apart from an edge of the one surface by a predetermined gap.

9. The battery storage tray of any one of the preceding claims, wherein:
each of the one or more inserts includes a support body including the second coupling portion disposed at both ends and a plurality of storage frame portions disposed on the support body and each including a bent member that is at least partially bent; and
the storage groove is disposed in the storage frame portion.

10. The battery storage tray of any one of the preceding claims, wherein each of the one or more inserts is arranged across the inner space of the accommodating portion.

11. The battery storage tray of claim 10, wherein:
the one or more inserts include a plurality of inserts; and
all of the plurality of inserts are arranged across the inner space of the accommodating portion in a same direction as each other.

12. The battery storage tray of claim 10 or 11, wherein:
the plurality of inserts includes a first insert and a second insert; and
the first insert and the second insert are adjacent to each other while having structures symmetrical to each other.

13. The battery storage tray of claim 12, further comprising:
a battery storage portion disposed between the first insert and the second insert and configured to accommodate a battery cell,
wherein the battery storage portion is located in a region in which the storage groove of the first insert and the storage groove of the second insert face each other.

14. The battery storage tray of one of claims 11 to 13, wherein a first maximum number of battery cells to be housed in one direction when all of the plurality of inserts are arranged across the inner space of the accommodating portion in a first direction and a second maximum number of battery cells to be housed in the one direction when all of the plurality of inserts are arranged across the inner space of the accommodating portion in a second direction are equal to each other.

15. The battery storage tray of any one of the preceding claims, wherein the battery cell includes an outer material including an electrode assembly embedded therein and one or more terminals electrically connected to the electrode assembly and configured to protrude in one direction from the outer material in a direction not facing the inner space of the accommodating portion.
